# EUROPEAN PATENT SPECIFICATION

(11) **EP 4 209 102 B1**
(45) Date of publication and mention of the grant of the patent: **02.10.2024**
(21) Application number: 20816966.4
(22) Date of filing: 30.11.2020
(51) Int. Cl.: H04W 76/22

(54) **METHOD AND APPARATUS OF PDU SESSION MANAGEMENT FOR DIVERSE SERVICE REQUIREMENTS**
VERFAHREN UND VORRICHTUNG ZUR PDU-SITZUNGSVERWALTUNG FÜR VERSCHIEDENE DIENSTANFORDERUNGEN
PROCÉDÉ ET APPAREIL DE GESTION DE SESSION PDU POUR DIVERSES EXIGENCES DE SERVICE

(43) Date of publication of application: 12.07.2023
(73) Proprietor: Huawei Technologies Co., Ltd., Shenzhen, Guangdong 518129 (CN)
(72) Inventor: VAKEESAR, Siva, 16440 Kista (SE); HAMIDIAN, Ali, 16440 Kista (SE); CONSOLI, Antonio, 16440 Kista (SE)
(74) Representative: Gill Jennings & Every LLP
(86) International application number: PCT/EP2020/083922
(87) International publication number: WO 2022/111831

(56) References cited:
- US-A1- 2019 191 330
- NTT DOCOMO: "Correction of having multiple S-NSSAIs for a single PDU session", vol. SA WG2, no. Newport Beach, USA; 20180528 - 20180601, 6 June 2018 (2018-06-06), XP051532830, Retrieved from the Internet <URL:http://www.3gpp.org/ftp/tsg%5Fsa/TSG%5FSA/TSGS%5F80/Docs/SP%2D180482%2Ezip> [retrieved on 20180606]
- NOKIA ET AL: "Multiple S-NSSAIs in PDU session establishment", vol. CT WG1, no. Sophia-Antipolis (France); 20180709 - 20180713, 6 July 2018 (2018-07-06), XP051465931, Retrieved from the Internet <URL:http://www.3gpp.org/ftp/Meetings%5F3GPP%5FSYNC/CT1/Docs> [retrieved on 20180706]
- HUAWEI ET AL: "Solution for KI 1 and KI 2: Packet Aggregation for Small Data Delivery", vol. SA WG2, no. Vilnius, Lithuania; 20180702 - 20180706, 26 June 2018 (2018-06-26), XP051538202, Retrieved from the Internet <URL:http://www.3gpp.org/ftp/tsg%5Fsa/WG2%5FArch/TSGS2%5F128%5FVilnius/Docs/S2%2D186736%2Ezip> [retrieved on 20180626]
- NOKIA ET AL: "Slice assistance Information over RRC", vol. RAN WG2, no. Reno, USA; 20171127 - 20171201, 17 November 2017 (2017-11-17), XP051371421, Retrieved from the Internet <URL:http://www.3gpp.org/ftp/tsg%5Fran/WG2%5FRL2/TSGR2%5F100/Docs/> [retrieved on 20171117]

## Description

### Technical Field

The invention relates to an Access and mobility Management Function (AMF), an Application Function (AF), or a Policy Control Function (PCF) providing enhancements to Packet Data Unit (PDU) session management to support traffic with diverse service requirements. Furthermore, the invention also relates to corresponding methods and a computer program.

### Background

One of the key technological ingredients that make up a 5G System (5GS) is network slicing. A network slice is a logical network that provides specific capabilities and characteristics and may be optimized for a specific traffic class. This means that two different network slices may not necessarily be similar to each other in terms of service they support. The network slices may provide different services because of service features, special hardware, software, processing capabilities and different Layer 1 techniques or configurations. In terms of service differentiation, Quality of Service (QoS) of a network slice is important. GSM Alliance (GSMA) clearly indicated that different Slice/Service Types (SSTs) support different QoS performance requirements, especially different 5G QoS Identifiers (5QIs). 3GPP introduces an attribute called *perfReq* as part of *sliceProfile* for indicating different performance requirements as supported by different SSTs. This means that different SSTs such as Ultra Reliable Low Latency Communication (URLLC), enhanced Mobile BroadBand (eMBB), and Mobile Internet of Things (MloT) have their own *perfReq* as indicated respectively by *uRLLCPerfReq, eMBBPerfReq,* and *mIoTPerfReq.* It is expected that SSTs will be defined and possibly also standardized to be able to fulfil the requirements of most of the applications within a specific vertical domain or even a large number of general purpose applications. NTT DOCOMO: "Correction of having multiple S-NSSAIs for a single PDU session",,vol. SA WG2, no. Newport Beach, USA; 20180528 - 20180601 6 June 2018 (2018-06-06) discloses the use of PDU sessions with multiple S-NSSAIs.

NOKIA ET AL: "Multiple S-NSSAIs in PDU session establishment",,vol. CT WG1, no. Sophia-Antipolis (France); 20180709 - 20180713 6 July 2018 (2018-07-06) discloses the possibility of sending S-NSSAIs for establishing a PDU session.

### Summary

An objective of embodiments of the invention is to provide a solution which mitigates or solves the drawbacks and problems of conventional solutions.

3GPP specifies 4 different standardised SSTs. There are no limits on the number of different SSTs that can be supported by an operator network considering that there also can be nonstandardised SST values.

Another objective of embodiments of the invention is to provide a solution for diverse service requirements through different network slices in communication systems.

The above or further objectives are solved by the subject matter of the independent claims. Further advantageous embodiments of the invention can be found in the dependent claims.

According to a first aspect of the invention, the above mentioned or other objectives are achieved with an Access and mobility Management Function, AMF, for a communication system, the AMF being configured to
receive a Protocol Data Unit, PDU, session request from a client device, wherein the PDU session request indicates a set of Single Network Slice Selection Assistance Information(s), S-NSSAI(s), for supporting an aggregated PDU session for the client device in a single Public Land Mobile Network, PLMN, wherein the aggregated PDU session comprises two or more S-NSSAIs;
select a set of Session Management Functions, SMFs, based on the PDU session request;
transmit a set of PDU session operation session management context requests associated with the aggregated PDU session to the set of selected SMFs;
receive a set of PDU session operation session management context responses from the set of selected SMFs; and
serve an operation of the aggregated PDU session based on the set of PDU session operation session management context responses.

The PDU session request can be any one of an establishment, modification or termination/release request associated with an aggregated PDU session which uses two or more S-NSSAIs. A PDU session operation session management context request can be any one of a create or update/release session management context request.

An advantage of the AMF according to the first aspect is that the AMF introduces support for PDU session establishment, modification and release requests which contains QoS flows established across more than one S-NSSAI in a single PLMN, while conventional solutions only supports one single S-NSSAI per PDU session per PLMN. Another advantage is that the AMF introduces support for multiple SMFs being able to managing independently the QoS flows of the PDU session that falls within an S-NSSAI. In conventional solutions, there is support only for one SMF per PDU session. The combination of those two advantages enables the establishment of PDU session with QoS flows established across multiple S-NSSAIs in a single PLMN being managed by separate SMFs in the different S-NSSAIs, while the 3GPP system can only support establishment of PDU sessions with only one S-NSSAI in a single PLMN and managed by a single SMF in that S-NSSAI. The limitation in the 3GPP system can only be overcome by a client device such as a UE requesting establishment of multiple PDU sessions, one per requested S-NSSAI. Overcoming this limitation introduce the advantage of reduced signalling and the possibility to define policies for a more consistent resource usage per application across multiple S-NSSAIs. The set of S-NSSAI(s) could be for simultaneously supporting an aggregated PDU session for the client device in a single PLMN.

In an implementation form of an AMF according to the first aspect, the PDU session request further indicates a set of Data Network Names, DNNs, and/or an NSSAI associated with the set of S-NSSAI(s).

An advantage with this implementation form is that the client device has a variety of forms to specify traffic routing for the specific PDU session across multiple slices, either by indicating the set of S-NSSAIs, or specifying an NSSAI or even specifying terminating DNN, which could be served by different S-NSSAIs according to pre-configured operator policies.

In an implementation form of an AMF according to the first aspect, the AMF is configured to
determine the set of PDU session operation session management context requests based on the PDU session request.

An advantage with this implementation form is that the AMF may delegate the management of the QoS flows pertaining to specific network slices established in the PDU session to independent SMFs. Then, each SMF can be specialized in/for different traffic.

In an implementation form of an AMF according to the first aspect, each PDU session operation session management context request indicates operation information for operating a portion of the aggregated PDU session.

An advantage with this implementation form is that the AMF may delegate the management of the portion of the PDU session pertaining to a specific network slice to the relevant SMF. The AMF may forge the PDU session create/modify/release session management context request to be sent to each independent SMF according to internal configuration or client device specified information about which traffic shall be established via which slice, while in current 3GPP systems the AMF derives the content of the PDU session create/modify/release session management context request only according to the content of the PDU session operation request, which cannot support traffic establishment via multiple network slices. Another advantage is the reduction of the number of client device triggered PDU session operation requests that are needed on the aggregated PDU Session. In fact this delegation can include the possibility - for a single client device requested operation (such as establishment, modification or termination of the PDU Session) - several different PDU session operation session management context requests triggered from the AMF to the involved SMFs. For example, the client device may send a PDU session modification request for a PDU session with two QoS flows, each of them in a different S-NSSAIs, that intend to swap the two QoS flows in the respective S-NSSAI, e.g. from S-NSSAI 1 to S-NSSAI 2. Such client device request can trigger multiple PDU session operation session management context requests to be sent from AMF to the involved SMFs in each S-NSSAI. In the specific example these request would be a PDU session update session management context request to the SMF in S-NSSAI 1 to terminate the QoS flow and an a PDU session update session management context request to the SMF in S-NSSAI 2.

In an implementation form of an AMF according to the first aspect, serving the operation of the aggregated PDU session comprises
parse a first N1 SM container comprised in the PDU session request, wherein the first N1 SM container comprises information about the aggregated PDU session;
determine a set of second N1 SM containers based on the first N1 SM container, wherein each second N1 SM container comprises information about a single PDU session portion; and
transmit the set of second N1 SM containers to the set of selected SMFs in the set of PDU session operation session management context requests.

An advantage with this implementation form is that the delegation of the management of the aggregated PDU session operation can be obtained with the determination of the second N1 SM containers and the associated set of PDU session operation session management context request, where operation can be either establishment, modification or release.

In an implementation form of an AMF according to the first aspect, each PDU session operation session management context requests comprise an instruction to create, update or release a set of session management, SM, contexts.

An SM context may represent an association between the NF service consumer (e.g. AMF) and the SMF for a PDU session. An advantage with this implementation form is that the implementation form achieves it benefits without modifying the existing interaction between AMF and SMF and without the need of modifications in the content of the SM context. This is achieved by the AMF requesting respective SMFs the creation, update or release of the relevant SM contexts for the portion of the PDU Session that is relevant for each SMF. Therefore, all benefits concerning the improvements related to PDU session management can be obtained without modifications on the SMF node, that is the central node in the 3GPP system for the session management functionality.

According to a second aspect of the invention, the above mentioned and other objectives are achieved with an Application Function, AF, for a communication system, the AF being configured to
transmit an AF session request associated with a set of Quality-of-Service, QoS, references to a Network Exposure Function, NEF, wherein the AF session request indicates a S-NSSAI for each QoS reference in the set of QoS references; and
receive an AF session response from the NEF.

The AF session request can be a create or update request and the AF session response can indicate if the create or update operation was successful.

An advantage of the AF according to the second aspect is that in this way the S-NSSAI can be made specific for each QoS reference or flow description, which in the request are used to specify the type of QoS flows requested in the AF session. In 3GPP, the AF session and therefore all the QoS flows can only be established for one S-NSSAI per PLMN.

In an implementation form of an AF according to the second aspect, two or more QoS references indicates different S-NSSAIs for a single PLMN.

An advantage with this implementation form is that in this way the AF may request the request of an AF session with different and diverse QoS requirements that are intended to be fulfilled through different S-NSSAIs. In 3GPP, the AF session and therefore all the QoS flows can only be established for one S-NSSAI per PLMN.

According to a third aspect of the invention, the above mentioned and other objectives are achieved with a Policy Control Function, PCF, for a communication system, the PCF being configured to
obtain an indication of an aggregated PDU session for a client device, wherein the aggregated PDU session comprises two or more S-NSSAIs for a single PLMN;
determine a set of SMFs and a set of updated policy information based on the indication of the aggregated PDU session; and
transmit a set of update policy control requests to the set of SMFs, wherein the set of update policy control requests indicates the set of updated policy information associated with the aggregated PDU session.

An advantage of the PCF according to the third aspect is that the PCF is able to perform policy control of PDU sessions in multiple S-NSSAIs, and the same policy can be enforced within the same procedure in the multiple SMFs that manage the relevant PDU session.

In an implementation form of a PCF according to the second aspect, the indication of the aggregated PDU session comprises a requirement of an updated policy.

An advantage with this implementation form is that in case of aggregated PDU Session, the PCF can determine which SMFs require update policy information depending on the SMFs controlling the PDU Session legs for which policy shall be modified. Therefore, the same indication can trigger the PCF updating policies in multiple SMFs managing different portions of the same PDU session in the different S-NSSAIs.

In an implementation form of a PCF according to the second aspect, the PCF is further configured to
receive a set of update policy control responses from the set of SMFs; and
modify the set of updated policy information based on the set of update policy control responses.

An advantage with this implementation form is that by collecting all the SMF responses that pertain the same aggregated PDU session - the PCF may now be aware that the new policy has been correctly stored in all the SMF instances related to the aggregated PDU session and may also act - in case one of the SMF instances may not receive the new policy association correctly - act accordingly, for example by updating the policy of the other SMF instances pertaining a different S-NSSAI.

According to a fourth aspect of the invention, the above mentioned and other objectives are achieved with a method for an AMF, the method comprises
receiving a PDU session request from a client device, wherein the PDU session request indicates a set of S-NSSAI(s) for supporting an aggregated PDU session for the client device in a single PLMN wherein the aggregated PDU session comprises two or more S-NSSAls;
selecting a set of SMFs based on the PDU session request;
transmitting a set of PDU session operation session management context requests associated with the aggregated PDU session to the set of selected SMFs;
receiving a set of PDU session operation session management context responses from the set of selected SMFs; and
serving an operation of the aggregated PDU session based on the set of PDU session operation session management context responses.

The method according to the fourth aspect can be extended into implementation forms corresponding to the implementation forms of the AMF according to the first aspect. Hence, an implementation form of the method comprises the feature(s) of the corresponding implementation form of the AMF.

The advantages of the methods according to the fourth aspect are the same as those for the corresponding implementation forms of the AMF according to the first aspect.

According to a fifth aspect of the invention, the above mentioned and other objectives are achieved with a method for an AF, the method comprises
transmitting an AF session request associated with a set of QoS references to a NEF, wherein the AF session request indicates a S-NSSAI for each QoS reference in the set of QoS references; and
receiving an AF session response from the NEF.

The method according to the fifth aspect can be extended into implementation forms corresponding to the implementation forms of the AF according to the second aspect. Hence, an implementation form of the method comprises the feature(s) of the corresponding implementation form of the AF.

The advantages of the methods according to the fifth aspect are the same as those for the corresponding implementation forms of the AF according to the second aspect.

According to a sixth aspect of the invention, the above mentioned and other objectives are achieved with a method for a PCF, the method comprises
obtaining an indication of an aggregated PDU session for a client device, wherein the aggregated PDU session comprises two or more S-NSSAIs for a single PLMN;
determining a set of SMFs and a set of updated policy information based on the indication of the aggregated PDU session; and
transmitting a set of update policy control requests to the set of SMFs, wherein the set of update policy control requests indicates the set of updated policy information associated with the aggregated PDU session.

The method according to the sixth aspect can be extended into implementation forms corresponding to the implementation forms of the PCF according to the third aspect. Hence, an implementation form of the method comprises the feature(s) of the corresponding implementation form of the PCF.

The advantages of the methods according to the sixth aspect are the same as those for the corresponding implementation forms of the PCF according to the third aspect.

The invention also relates to a computer program, characterized in program code, which when run by at least one processor causes said at least one processor to execute any method according to embodiments of the invention.

The invention also relates to a computer program product / a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the embodiments of the invention will be apparent from the following detailed description.

### Brief Description of the Drawings

The appended drawings are intended to clarify and explain different embodiments of the invention, in which:
- Fig. 1 shows an AMF according to an embodiment of the invention;
- Fig. 2 shows a method for an AMF according to an embodiment of the invention;
- Fig. 3 shows an AF according to an embodiment of the invention;
- Fig. 4 shows a method for an AF according to an embodiment of the invention;
- Fig. 5 shows a PCF according to an embodiment of the invention;
- Fig. 6 shows a method for a PCF according to an embodiment of the invention;
- Fig. 7 shows a communication network according to an embodiment of the invention;
- Fig. 8 shows PDU session management according to an embodiment of the invention;
- Fig. 9 shows an AF session setup procedure according to an embodiment of the invention;
- Fig. 10 shows an AF session update procedure according to an embodiment of the invention; and
- Fig. 11 shows a policy update procedure according to an embodiment of the invention.

### Detailed Description

If an application requires traffic with very diverse and extreme performance requirements, a single SST may not be able to support all the required traffic from that application. This is because each SST may have different boundaries in terms of what 5Qls and related QoS parameters, such as e.g. allowed range for Guaranteed Flow Bit Rate (GFBR), that the SST can support. In other words, in case an application has very extreme requirements, for example traffic with very high bitrate combined with traffic with very low latency, it can be supported efficiently and economically through traffic separation and simultaneous access to different distinct SSTs. For example, one SST for traffic with very high bitrate and another (distinct) SST for traffic with very low latency. Example of those applications are IP Multimedia Subsystem (IMS), Tele-Operated Driving (TOD), advanced driving and mobile robots.

In the 5GS, in order to request support for diverse QoS characteristics for its traffic, an application may have to request establishment of different QoS flows, each of them with different characteristics in terms of 5Qls and/or related QoS parameters. QoS flows are managed within packet data unit (PDU) sessions. Generally, when the User Equipment (UE) requests the establishment of a PDU session, the 5GS establishes that PDU session with one or more QoS flows, according to pre-configured policies. When the PDU session is released, all the related QoS flows are also released. The UE and the Application Function (AF) may request modification of a PDU session, if they require that the 5GS supports specific QoS flows for that PDU session, requesting a specific set of QoS flows to be supported. PDU session modification allows to add or remove QoS flows to a PDU session, as well as the modification of single characteristics and parameters of each QoS flow.

In the 5GS, each network slice is identified by a single network slice selection assistance information (S-NSSAI). In other words, an S-NSSAI identifies a Network Slice. An S-NSSAI may be comprised of: (a) A Slice/Service type (SST), which refers to the expected Network Slice behaviour in terms of features and services; and/or (b) A Slice Differentiator (SD), which is optional information that complements the Slice/Service type(s) to differentiate amongst multiple Network Slices of the same Slice/Service type. The 5GS mandates that all the QoS flows of a PDU Session are established over a single network slice within the Public Land Mobile Network (PLMN). This because a PDU session allows to specify one S-NSSAI in the PDU session establishment request, one S-NSSAI per home PLMN and one for the visited PLMN in the roaming scenario. PDU session modification procedure does not contemplate the possibility to add more S-NSSAIs per PLMN.

The current assumption within 3GPP is that traffic from a single application can be satisfied by a single PDU session. Thus, by a single S-NSSAI and its related single SST as S-NSSAI is PDU session-specific and a PDU session has only one SST. If a single application generates traffic having diverse and extreme performance requirements, the only way for 5GS to support such condition is by establishment of several PDU sessions for that applications, each of them with a different S-NSSAIs and related different SSTs. The 5GS may hence not be able to apply consistent policy towards traffic from a single UE application. The establishment of each PDU session also involves the generation of a significant signalling messages on the control plane.

An objective of the invention is to provide a mechanism whereby different QoS flows belonging to a single PDU session can make use of multiple S-NSSAIs each with different SSTs simultaneously in the same PLMN. This may allow applications to meet extreme and diverse requirements by establishing the required traffic over different network slices, i.e. different S-NSSAIs each with different SSTs, which can better satisfy the (extreme) QoS requirements of the applications. Such a mechanism introduces benefits in terms of signalling savings and of more consistent policy management and resource allocation per application.

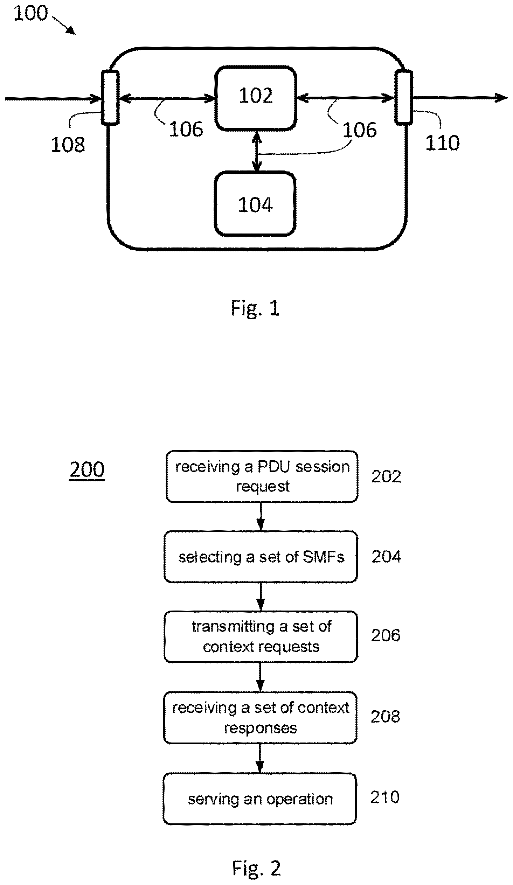

Fig. 1 shows an Access and mobility Management Function (AMF) 100 for a communication system 700 according to an embodiment of the invention. In the embodiment shown in Fig. 1, the AMF 100 comprises a processor 102 which can be coupled to an internal or external memory 104 with communication means 106 known in the art. The memory 104 may store program code that, when being executed, causes the processor 102 to performing the functions and actions described herein. The AMF 100 further comprises input means 108 and output means 110, which are both coupled to the processor core 102 with communication means 106 known in the art. The input means 108 could be also other interface.

The AMF 100 may be a standalone entity or may be comprised in one or more other network entities in the communication system 700. Thus, the AMF 100 may in embodiments be distributed over more than one network entity.

That the AMF 100 is configured to perform certain functions and actions can in this invention be understood to mean that the AMF 100 comprises suitable means, such as e.g. the processor 102, configured to perform said functions and actions.

According to embodiments of the invention the AMF 100 is configured to receive a PDU session request 710 from a client device 900. The PDU session request 710 indicates a set of S-NSSAI(s) for supporting an aggregated PDU session for the client device 900 in a single PLMN wherein the aggregated PDU session comprises two or more S-NSSAIs. The AMF 100 is further configured to select a set of Session Management Functions (SMFs) 810a, 810b,..., 810n based on the PDU session request 710, and transmit a set of PDU session operation session management context requests 720a, 720b,..., 720n associated with the aggregated PDU session to the set of selected SMFs 810a, 810b,..., 810n. The AMF 100 is further configured to receive a set of PDU session operation session management context responses 730a, 730b,..., 730n from the set of selected SMFs 810a, 810b,..., 810n, and serve an operation of the aggregated PDU session based on the set of PDU session operation session management context responses 730a, 730b,..., 730n. The set of S-NSSAI(s) could be for simultaneously supporting an aggregated PDU session for the client device in a single PLMN.

Fig. 2 shows a flow chart of a corresponding method 200 which may be executed in an AMF 100, such as the one shown in Fig. 1. The method 200 comprises receiving 202 a PDU session request 710 from a client device 900. The PDU session request 710 indicates a set of S-NSSAI(s) for supporting an aggregated PDU session for the client device 900 in a single PLMN wherein the aggregated PDU session comprises two or more S-NSSAIs. The method 200 further comprises selecting 204 a set of SMFs, 810a, 810b,..., 810n based on the PDU session request 710, and transmitting 206 a set of PDU session operation session management context requests 720a, 720b,..., 720n associated with the aggregated PDU session to the set of selected SMFs 810a, 810b,..., 810n. The method 200 further comprises receiving 208 a set of PDU session operation session management context responses 730a, 730b,..., 730n from the set of selected SMFs 810a, 810b,..., 810n, and serving 210 an operation of the aggregated PDU session based on the set of PDU session operation session management context responses 730a, 730b,..., 730n.

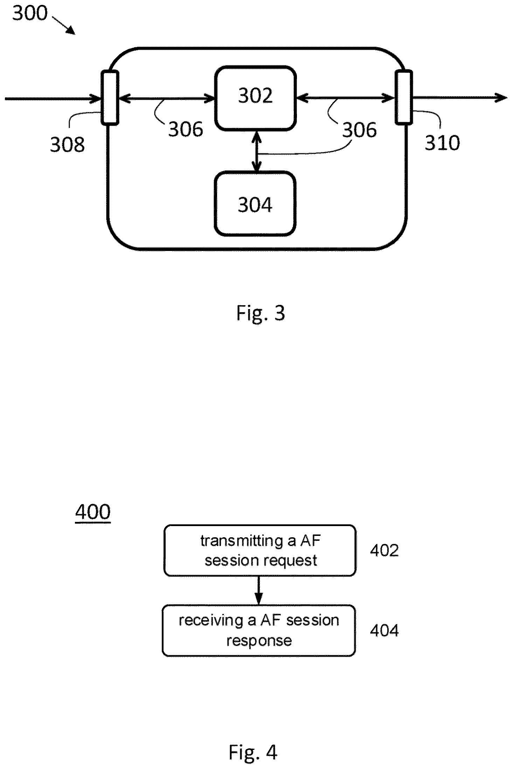

Fig. 3 shows an Application Function (AF) 300 for a communication system 700 according to an embodiment of the invention. In the embodiment shown in Fig. 3, the AF 300 comprises a processor 302 which can be coupled to an internal or external memory 304 with communication means 306 known in the art. The memory 304 may store program code that, when being executed, causes the processor 302 to performing the functions and actions described herein. The AF 300 further comprises input means 308 and output means 310, which are both coupled to the processor core 302 with communication means 306 known in the art.

The AF 300 may be a standalone entity or may be comprised in one or more network entities in the communication system 700. Thus, the AF 300 may in embodiments be distributed over more than one network entity.

That the AF 300 is configured to perform certain functions and actions can in this invention be understood to mean that the AF 300 comprises suitable means, such as e.g. the processor 302, configured to perform said functions and actions.

According to embodiments of the invention the AF 300 is configured to transmit an AF session request 740 associated with a set of QoS references to a Network Exposure Function (NEF) 820, wherein the AF session request 740 indicates a S-NSSAI for each QoS reference in the set of QoS references. The AF 300 is further configured to receive an AF session response 750 from the NEF 820.

Fig. 4 shows a corresponding method 400 which may be executed in an AF 300, such as the one shown in Fig. 3. The method 400 comprises transmitting 402 an AF session request 740 associated with a set of QoS references to a NEF 820, wherein the AF session request 740 indicates a S-NSSAI for each QoS reference in the set of QoS references. The method 400 further comprises receiving 404 an AF session response 750 from the NEF 820.

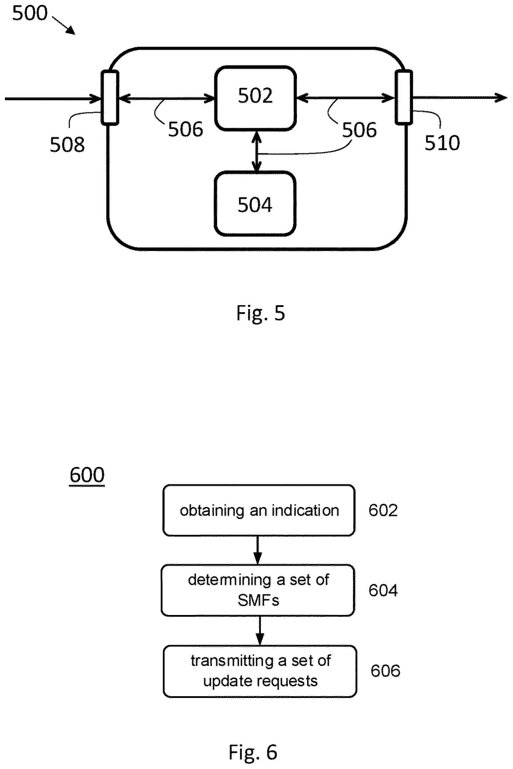

Fig. 5 shows a Policy Control Function (PCF) 500 for a communication system 700 according to an embodiment of the invention. In the embodiment shown in Fig. 5, the PCF 500 comprises a processor 502 which can be coupled to an internal or external memory 504 with communication means 506 known in the art. The memory 504 may store program code that, when being executed, causes the processor 502 to performing the functions and actions described herein. The PCF 500 further comprises input means 508 and output means 510, which are both coupled to the processor core 502 with communication means 506 known in the art.

The PCF 500 may be a standalone entity or may be comprised in one or more network entities in the communication system 700. Thus, the PCF 500 may in embodiments be distributed over more than one network entity.

That the PCF 500 is configured to perform certain functions and actions can in this invention be understood to mean that the PCF 500 comprises suitable means, such as e.g. the processor 502, configured to perform said functions and actions.

According to embodiments of the invention the PCF 500 is configured to obtain an indication of an aggregated PDU session for a client device 900, wherein the aggregated PDU session comprises two or more S-NSSAIs for a single PLMN. The PCF 500 is further configured to determine a set of SMFs 810a, 810b,..., 810n and a set of updated policy information based on the indication of the aggregated PDU session; and transmit a set of update policy control requests 760a, 760b,..., 760n to the set of SMFs 810a, 810b,..., 810n, wherein the set of update policy control requests 760a, 760b,..., 760n indicates the set of updated policy information associated with the aggregated PDU session.

Fig. 6 shows a corresponding method 600 which may be executed in a PCF 500, such as the one shown in Fig. 5. The method 600 comprises obtaining 602 an indication of an aggregated PDU session for a client device 900, wherein the aggregated PDU session comprises two or more S-NSSAIs for a single PLMN. The method 600 further comprises determining 604 a set of SMFs 810a, 810b,..., 810n and a set of updated policy information based on the indication of the aggregated PDU session; and transmitting 606 a set of update policy control requests 760a, 760b,..., 760n to the set of SMFs 810a, 810b,..., 810n, wherein the set of update policy control requests 760a, 760b,..., 760n indicates the set of updated policy information associated with the aggregated PDU session.

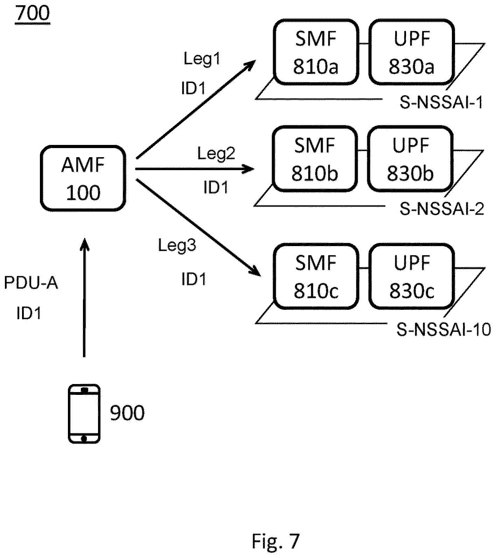

Fig. 7 shows a communication system 700 according to embodiments of the invention. In the shown embodiment, the communication system 700 comprises a client device 900 such as a UE, an AMF 100, a set of SMFs 810a, 810b, 810c, and a set of User Plane Functions (UPFs) 830a, 830b, 810c, configured to communicate with each other in the communication system 700. In embodiments, the communication system 700 is a communication system according to the 3GPP standard.

According to embodiments of the invention enhanced network slicing information is comprised in PDU session related communication between the nodes in the communication system 700. The enhanced network slicing information comprises a set of S-NSSAI(s) and enables different QoS flows referring to different S-NSSAIs to be bundled in a single PDU session. For example, a PDU session establishment request from the client device 900 can comprise a set of S-NSSAI(s) which enables the AMF to select and establish PDU sessions with a set of SMFs 810a, 810b,..., 810n capable of supporting the set of S-NSSAI(s).

With reference to Fig. 7, each SMF-UPF combination 810a-830a, 810b-830b, 810c-830c may support a respective network slice S-NSSAI-1, S-NSSAI-2, S-NSSAI-10. These S-NSSAIs could be some other S-NSSAIs from a set of S-NSSAI-(1-16). Conventionally, if traffic to and from the client device 900 have divers QoS requirements that cannot be handled by a single S-NSSAI, multiple separate PDU sessions have to be established for the client device 900. Embodiments of the invention introduce aggregation of such separate PDU sessions related to different S-NSSAIs into an aggregated PDU session. A PDU session in a specific S-NSSAI (or in one slice) is hereafter referred to as a PDU session leg. The aggregated PDU session according to embodiments of the invention may hence aggregate multiple PDU session legs.

Fig. 7 shows an aggregated PDU session PDU-A according to an embodiment of the invention comprising three separate PDU session legs Leg1, Leg2, Leg3 in the three S-NSSAIs, respectively. The aggregated PDU Session PDU-A and the PDU Session legs Leg1, Leg2, Leg3 all have the same PDU Session identity ID1, as indicated in Fig. 7.

In a 3GPP implementation, the aggregation is performed at the N1 level and enables a single AMF 100 to route control plane messages from and to the client device 900 for the aggregated PDU session. The single PDU session identity ID1 is maintained although a set of S-NSSAI(s) is simultaneously used by the same PDU session. This can be analogous to a situation where a single non-access stratum (NAS) service request consists of a single N1 session management (SM) container with multiple PDU session establishment requests having its own S-NSSAI and/or Data Network Name (DNN), but all of them will carry the same PDU session identity. Given that a single N1 SM container now can comprise multiple PDU session establishments, each having different S-NSSAIs and/or DNN, the AMF 100 will make use of one or many SMFs depending on whether a single SMF can handle different S-NSSAIs and/or DNNs or not. This means that although there will be a single N1 connection between the client device 900 and the AMF 100, there will be different N11 connections between the AMF 100 and the set of SMFs 810a, 810b,..., 810n that handle different QoS flows of the same PDU session. Thus, the client device 900 can maintain a single N1 SM container for a given PDU session consisting of multiple SM contexts when multiple SMFs are involved to handle different QoS flows belonging to the same PDU session, where the different QoS flows have different QoS requirements that cannot be handled by a single S-NSSAI and/or DNN.

The AMF 100 may perform implicit subscription about events related with the PDU session legs as in described in 3GPP. Furthermore, one or more of the following may apply to the PDU session legs:
- From a user plane perspective, each PDU session leg in an S-NSSAI may keep a separate user plane tunnel.
- Each PDU session leg in an S-NSSAI may be managed by its own SMF.
- Each PDU session leg in an S-NSSAI may make use of a different UPF, or even more UPFs in case of Session and Service Continuity (SSC) Mode 3 described in 5.6.9.2.3 of 3GPP TS 23.501.
- Each PDU session leg in an S-NSSAI may maintain an own session context.
- Each PDU session leg in an S-NSSAI may have an own N11 connection to the single AMF.
- Each PDU session leg in an S-NSSAI may have separate session management events, exposed by the respective SMF, as described in 3GPP.
- Each PDU session leg may contain respective QoS flows in the respective S-NSSAI.
- Each PDU session leg user plane may be terminated by its respective UPF and each UPF in the PDU session leg is in charge of managing the N3, N9 and N6 tunnels of the PDU session.

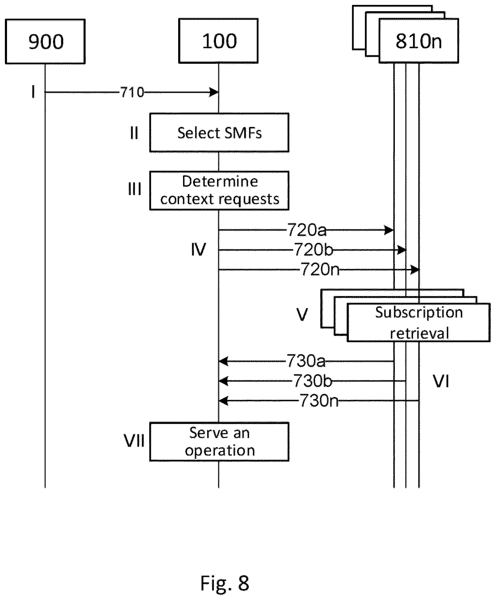

Fig. 8 shows PDU session management between the client device 900, the AMF 100 and a set of SMFs 810a, 810b,..., 810n according to an embodiment of the invention. The PDU session management messages exchanged between the client device 900 and the AMF 100 refer to an aggregated PDU session, while the AMF 100 involves the SMF 810n in the respective S-NSSAI for specific PDU session leg session management.

In step I in Fig. 8, the AMF 100 receives a PDU session request 710 from a client device 900. The PDU session request 710 can be a PDU session establishment request, a PDU session modification request, or a PDU session termination request. The received PDU session request 710 indicates a set of S-NSSAI(s) for supporting an aggregated PDU session for the client device 900 in a single PLMN, and the aggregated PDU session comprises two or more S-NSSAIs. In other words, the PDU session request 710 is a request for an aggregated PDU session using two or more S-NSSAls, i.e. a PDU session that simultaneously can support two or more S-NSSAIs. The PDU session request 710 may further indicates a set of DNNs and/or a NSSAI associated with the set of S-NSSAI(s).

The PDU session request 710 allows the client device 900 to indicate a set of S-NSSAI(s), a set of DNNs, and/or an NSSAI, that are specific to a single PLMN, which may be a home PLMN or visited PLMN. The set of S-NSSAI(s) and/or the NSSAI contain S-NSSAIs already included in the allowed NSSAI. The client device 900 may hence indicate specific sets of S-NSSAI(s) and/or DNNs that are specific to a home PLMN or visited PLMN.

Based on the received PDU session request 710, the AMF 100 selects a set of SMFs 810a, 810b,..., 810n in step II in Fig. 8. The AMF 100 may select the set of SMFs 810a, 810b,..., 810n based on the set of S-NSSAI(s) indicated in the received PDU session request 710 and internal configuration such as e.g. which SMF instance is serving which S-NSSAI. In this way, the AMF 100 may select one or more SMFs for the aggregated PDU session. The AMF 100 may hence select a SMF instance for each required PDU session leg according to the number of S-NSSAIs that needs to be involved, i.e. depending on slice support provided by different SMFs.

In embodiments of the invention, the selection of the set of SMFs 810a, 810b,..., 810n may comprise the AMF 100 discovering and allocating each SMF in the set of SMFs 810a, 810b,..., 810n according to the 3GPP standard. Thus, the existing procedure may be used and repeated to select multiple SMFs instead of a single SMF.

In step III in Fig. 8, the AMF 100 determines a set of PDU session operation session management context requests 720a, 720b,..., 720n associated with the aggregated PDU session. The AMF 100 may determine the set of PDU session operation session management context requests 720a, 720b,..., 720n based on the PDU session request 710. In embodiments, the determination may be based on the set of S-NSSAI(s) indicated in the received PDU session request 710 and internal configuration such as e.g. which SMF instance is serving which S-NSSAI. For example, depending on slice support required as indicated by the set of S-NSSAI(s) and slice support provided by the SMFs, the AMF 100 determines that one or more PDU session operation session management context requests 720a, 720b,..., 720n towards one or more SMFs 810a, 810b,..., 810n are needed.

Each PDU session operation session management context request 720n may indicate operation information for operating a portion of the aggregated PDU session. The portion of the aggregated PDU session may correspond to the previously described PDU session leg and may be a portion of the PDU session in one S-NSSAI from the set of S-NSSAI(s) which is managed by one SMF from the set of SMFs 810a, 810b,..., 810n.

Furthermore, each PDU session operation session management context request 720n may comprise an instruction to create, update or release a set of session management (SM) contexts. Thus, each request in the set of PDU session operation session management context requests 720a, 720b,..., 720n may be a PDU session create session management context request, a PDU session update session management context request, or a PDU session release session management context request related to a set of SM contexts.

In step IV in Fig. 8, the AMF 100 transmits the set of PDU session operation session management context requests 720a, 720b,..., 720n associated with the aggregated PDU session to the set of selected SMFs 810a, 810b,..., 810n. In embodiments of the invention, a PDU session operation session management context request 720n may correspond to a Nsmf PDUSession_CreateSMContext_Request or a Nsmf_PDUSession_UpdateSMContext _Request according to the 3GPP standard.

Upon receiving a respective PDU session operation session management context request 720n, each SMF in the set of selected SMFs 810a, 810b,..., 810n performs subscription retrieval in step V in Fig. 8. The subscription retrieval may e.g. be performed according to 3GPP. Based on the subscription retrieval, each SMF in the set of selected SMFs 810a, 810b,..., 810n transmits a PDU session operation session management context response 730n to the AMF 100. Thus, the AMF 100 receives a set of PDU session operation session management context responses 730a, 730b,..., 730n from the set of selected SMFs 810a, 810b,..., 810n, as shown in step VI in Fig. 8. Each PDU session operation session management context response 730n may correspond to a Nsmf_PDUSession_ CreateSMContext_Response or a Nsmf PDUSession_UpdateSMContext Response according to the 3GPP standard.

In step VII in Fig. 8, the AMF 100 serves an operation of the aggregated PDU session based on the received set of PDU session operation session management context responses 730a, 730b,..., 730n. The operation served by the AMF 100 may include an establishment operation, a modification operation, or a termination/release operation. For example, upon receiving the set of PDU session operation session management context responses 730a, 730b,..., 730n from the set of SMFs 810a, 810b,..., 810n including results and error causes, the AMF 100 transmits an aggregated positive or negative response to the client device 900 and the radio access network (RAN), not shown in Fig. 8.

In embodiments of the invention, serving the operation of the aggregated PDU session may comprise the AMF 100 parsing a first N1 SM container comprised in the PDU session request 710, where the first N1 SM container comprises information about the aggregated PDU session. The first N1 SM container may be added to the PDU session request 710 by the client device 900 and may comprise two or more S-NSSAIs or information from which the two or more S-NSSAIs can be derived and/or determined. The AMF 100 parses the first N1 SM container, i.e. the AMF 100 unpacks the first N1 SM container, and determines a set of second N1 SM containers based on the first N1 SM container. Each second N1 SM container comprises information about a single PDU session portion. The single PDU session portion can be a portion of the aggregated PDU session within one S-NSSAI, and may be correspond to a PDU session leg.

The AMF 100 transmits the set of second N1 SM containers to the set of selected SMFs 810a, 810b,..., 810n in the set of PDU session operation session management context requests 720a, 720b,..., 720n. In this way, each SMF 810n receives a PDU session operation session management context request 720n comprising one second N1 SM container comprising information related to a S-NSSAI that the SMF 810n is supposed to manage.

In embodiments of the invention, the AMF 100 may receive a modified second N1 SM container from one or more SMFs 810a, 810b,..., 810n. In this case, the AMF 100 may combine the modifications of the second N1 SM containers and update the first N1 SM container that is sent back to the client device 900 for the aggregated PDU session.

Specifically, the N1 SM container received by the client device can be used by the AMF to populate the set of second N1 SM containers. The N1 SM container received by the client device comprises the operation requested by the client device, i.e. establishment, modification or release. The second set of N1 SM containers will match such operation. In case of establishment, the N1 SM container received by the client device comprises a PDU Session Establishment Request which has embedded a PDU session ID. The set of second N1 SM container will set in the PDU Session Establishment Request the same value of PDU session ID. This has an advantage of allowing the AMF to keep track of all the PDU session legs that are associated with the PDU session ID of the aggregated PDU session and perform aggregated management and hence achieve the intended benefits, such as saving of control plane resources on the UE interface and consistent resource management across the multiple S-NSSAIs. The NAS message from the client device to the AMF also comprises the list of S-NSSAls, and/or client device requested DNNs. This information may be used by the AMF to populate the information elements in the set of PDU session operation session management context request. By selecting from the NAS message which S-NSSAI and/or client device requested DNN (out of the list that is included by the client device) is selected and included in the set of PDU session operation session management context request the AMF can achieve delegation of PDU session operations to the respective involved SMFs, according to which portion of the aggregated PDU session has to be managed by which SMF.

After step VI in Fig. 8, each involved SMF 810n configures packet detection, enforcement and reporting rules to be installed on a respective UPF on a per QoS flow basis, i.e. not on a per PDU session basis. This may involve the SMF 810n performing steps 7a-10b as described in 3GPP. The SMF 810n may further notify the AMF 100 with Namf_Communication_N1N2MessageTransfer, i.e. perform step 11 as described in 3GPP. Furthermore, the AMF 100 collects all the responses from the set of SMFs 810a, 810b,..., 810n and may provide cumulative data to the RAN, as in step 12 of a UE-Requested PDU session establishment as described in 3GPP. These steps are omitted in Fig. 8 for the sake of simplicity but may be considered to be part of the herein disclosed procedure.

Conventionally, the SMF hides involvement of multiple UPFs for redundant transmission from an AMF. In a similar way, the AMF 100 hides the involvement of multiple SMFs from the RAN, but QoS profile is provided to a gNB by each SMF 810n. Steps 13-16b of clause 4.3.2.2.1 of 3GPP TS 23.502 may follow according to conventional procedures. In step 16c of clause 4.3.2.2.1 of 3GPP TS 23.502, if any of the selected SMFs 810n has not yet registered for the PDU session, the SMF 810n may perform such procedure with the Unified Data Management (UDM) using Nudm_UECM_Registration comprising Subscription Permanent Identifier (SUPI), DNN, S-NSSAI, PDU session ID, and SMF identity. The procedure is performed for a given QoS flow pertaining to a given aggregated PDU session. As a result, the UDM stores following information: SUPI, SMF identity and the associated DNN, S-NSSAI and PDU session ID. The UDM may further store this information in the Unified Data Repository (UDR) by Nudr_DM_Update comprising SUPI, subscription data, UE context in SMF data. In this way, the client device 900 may maintain a single N1 SM container for a given PDU session consisting of multiple SM contexts.

The UDM may be enhanced to support registration procedure from multiple SMFs for the same PDU Session ID in step 16c of clause 4.3.2.2.1 of 3GPP TS 23.502 for the invocation of Nudm_UECM_Registration service so that the information is appended from multiple S-NSSAIs for the same PDU Session ID. In the same way, Nudr_DM_Update service operation for the UDR is enhanced to support storing such information for the aggregated PDU session.

In steps 7b and 9 of clause 4.3.2.2.1 of 3GPP TS 23.502, SM policy association establishment and modification may happen independently for each PDU session leg in each respective S-NSSAI with the respective PCF. In order to achieve awareness of all the resources associated to the different slices for the same aggregated PDU session at core network level, step 7a may be enhanced so that each independent PCF selection procedure results in the selection of the same PCF instance. If Network Routing Function (NRF) is used for PCF selection, this can be done by using the SUPI of the client device 900 as input for PCF discovery by the NRF. The NRF may therefore be configured in such a way that, if a PCF has already been selected for a specific SUPI, following requests of PCF selection pertaining to the same SUPI result in the same PCF instance being selected. Therefore, a single PCF instance may be responsible for policy of all the PDU session legs of the aggregated PDU session, even when those legs pertain to different S-NSSAIs. The PCF may further be enhanced to support a PDU session management policy that contains many policy subsections, one for each PDU session leg of the aggregated PDU session.

According to embodiments of the invention a procedure for an AF 300 to provide information about an aggregated PDU session to a 5G core network is provided. In this way, the AF 300 can inform the 5G core network that the PDU session establishment associated with a particular application with extreme requirements results in an aggregated PDU session and involves one or many slices identified by a set of S-NSSAIs and/or a set of DNNs.

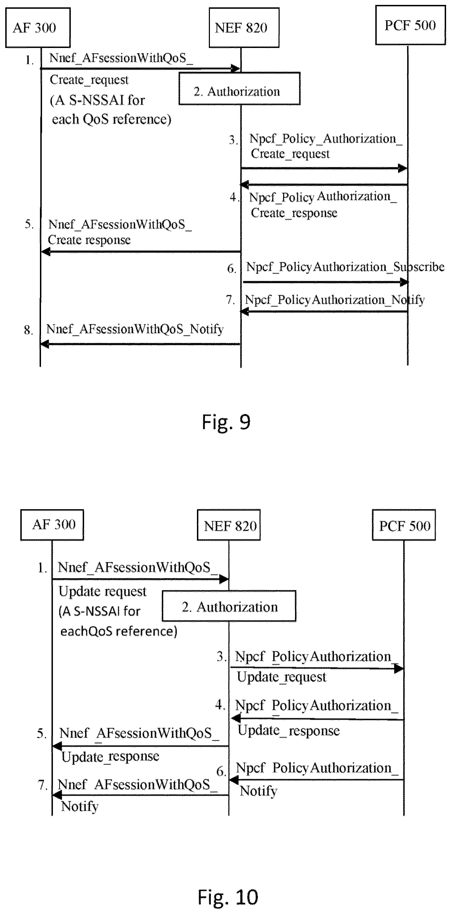

In embodiments of the invention the information is exchanged between the AF 300 and a network exposure function (NEF) 820. The AF 300 transmits an AF session request 740 associated with a set of QoS references to the NEF 820, and the AF session request 740 indicates a S-NSSAI for each QoS reference in the set of QoS references. The AF session request 740 may be a create request or update request, as will be described with reference to Figs. 9 and 10, respectively. Furthermore, two or more QoS references may indicate different S-NSSAIs for a single PLMN. The AF 300 receives an AF session response 750 from the NEF 820. The AF session response 750 indicates whether the create or update operation was successful.

The AF session request 740 may be transmitted as part of a modified AF session with required QoS procedure as described in 3GPP and related procedures, i.e. setting up an AF session with required QoS procedure and AF session with required QoS update procedure as described in 3GPP, respectively. In this case, for each pre-defined QoS information sets, the AF 300 may include the requested S-NSSAI.

Fig. 9 shows the case in which the AF session request 740 is a create request and a part of the setting up an AF session with required QoS procedure. In step 1 in Fig. 9, the AF 300 transmits an AF session request 740 to the NEF 820, which is called a Nnef_ AFsessionWithQoS_Create_request and indicates a S-NSSAI for each QoS reference in the set of QoS references. The NEF 820 performs authorization in step 2 and transmits a Npcf_Policy_Authorization_Create_request to a PCF 500 in step 3. The Npcf_Policy_ Authorization_Create_request may involve PDU session leg modifications in each of the involved S-NSSAIs and in several SMFs. The PCF 500 is responsible for policy creation with each of the involved SMFs, depending on the number of S-NSSAIs included in the AF session request 740 in step 1. In step 4, the PCF 500 transmits a Npcf_Policy_Authorization_ Create_response to the NEF 820 indicating whether the create operation was successful or not. The indication is passed on by the NEF 820 to the AF 300 in step 5 in a Nnef_AFsessionWithQoS_Create_response. The Nnef_AFsessionWithQoS_Create response corresponds to the AF session response 750 and indicates to the AF 300 whether the create operation was successful or not. In step 6, the NEF sends a Npcf_PolicyAuthorization_Subscribe message to the PCF to subscribe to notifications of resource allocation status and may subscribe to other events described in 3GPP. In ste7
when the event condition is met, the PCF 500 sends Npcf_PolicyAuthorization_Notify message to the NEF 820 notifying about the event. In step 8 the NEF 820 sends Nnef_AFsessionWithQoS_Notify message with the event reported by the PCF 500 to the AF 300. It is noted that the PCF 500 in step 7 will include the events to be reported to the AF 300 for all of the SMFs included in the PDU session.

Fig. 10 shows the case in which the AF session request 740 is an update request and a part of the AF session with required QoS update procedure. In step 1 in Fig. 10, the AF 300 transmits an AF session request 740 to the NEF 820, which is called a Nnef_AFsessionWithQoS_Update _request and indicates a S-NSSAI for each QoS reference in the set of QoS references. The NEF 820 performs authorization in step 2 and transmits a Npcf_Policy_Authorization_Update request to a PCF 500 in step 3. The Npcf_Policy_ Authorization_Update request may involve PDU session leg modifications in each of the involved S-NSSAIs and in several SMFs. The PCF 500 is responsible for policy modification with each of the involved SMFs, depending on the number of S-NSSAIs included in the AF session request 740 in step 1. In step 4, the PCF 500 transmits a Npcf_Policy_Authorization _Update_response to the NEF 820 indicating whether the update operation was successful or not. The indication is passed on by the NEF 820 to the AF 300 in step 5 in a Nnef_AFsessionWithQoS_Update_response. The Nnef_AFsessionWithQoS_Update_ response corresponds to the AF session response 750 and indicates to the AF 300 whether the update operation was successful or not. In step 6 the PCF sends Npcf_PolicyAuthorization_Notify message to the NEF 820 when the modification of the transmission resources corresponding to the QoS update succeeded or failed. In step 7 the NEF 820 sends Nnef_AFsessionWithQoS_Notify message with the event reported by the PCF 500 to the AF 300. It is noted that in step 6 the PCF 500 includes in the message information collected from all of the SMFs involved in the PDU Session.

In an alternative, the AF 300 may provide information about an aggregated PDU session to the 5G core network by modification of 3GPP, AF Influence on traffic routing. In this case, the initial AF request to the 5G core network may include additional information that results in the involvement in the PDU session of one or many slices identified by a combination of S-NSSAI and DNNs. As a result, the 5G core network can map this identifier onto one or many S-NSSAIs and target DNNs, i.e. a list of DNNs and corresponding S-NSSAI. Table 1 below shows a nonlimiting example of new content of such an AF request. The new information content is required in order to indicate that the PDU Session associated with the AF Session and requested by a particular Application (e.g., TOD) needs to be established through more than one slice, identified by a combination of DNN and S-NSSAI. However, other ways of formulating and implementing said information is possible.

In an alternative, the client device 900 can include an AF-Service-ldentifier in a PDU session establishment request instead of full S-NSSAI and/or DNN list that will help the AMF understand what S-NSSAIs and DNNs are involved based on augmented UE subscription or application configuration as made by a corresponding AF through a PCF.

**Table 1**

| **Information Name** | **Applicable for PCF or NEF** | **Applicable for NEF only** | **Category** |
|---|---|---|---|
| **Traffic Description** | Defines the target traffic to be influenced, represented by **a list of the** combination of DNN and optionally S-NSSAI **that this particular PDU session should be associated with,** and application identifier or traffic filtering information. | The target traffic can be represented by AF-Service-Identifier, instead of combination of DNN and optionally S-NSSAI. | Mandatory |
| **Potential Locations of Applications** | Indicates potential locations of applications, represented by a list of **DNNs and/or** DNAI(s). | The potential locations of applications can be represented by AF-Service-Identifier. | Conditional |
| **Target UE Identifier(s)** | Indicates the UE(s) that the request is targeting, i.e. an individual UE, a group of UE represented by Internal Group Identifier, or any UE accessing **the one or many** combinations of DNN, S-NSSAI and DNAI(s). | GPSI can be applied to identify the individual UE, or External Group Identifier can be applied to identify a group of UE. | Mandatory |
| ... | ... | ... | ... |

The S-NSSAI information in this disclosure may be considered to be QoS flow-specific and not PDU session-specific. Therefore, S-NSSAI information may be removed from a handover request, an initial context setup request, and/or a PDU session resources setup request as defined in 3GPP TS 38.413. Instead, the S-NSSAI information may added to the PDU session resource setup request transfer as defined in 3GPP TS 38.413.

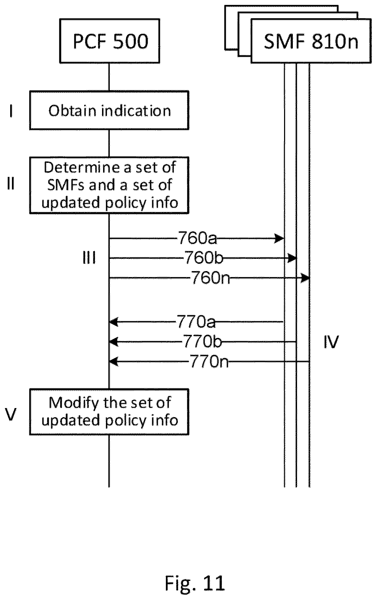

According to embodiments of the invention a PCF initiated SM policy association modification procedure may be modified as described with reference to Fig. 11. In step I in Fig. 11, the PCF 500 obtains an indication of an aggregated PDU session for a client device 900. The aggregated PDU session comprises two or more S-NSSAIs for a single PLMN. The indication of the aggregated PDU session may comprise a requirement of an updated policy. The PCF 500 may hence decide that the indicated aggregated PDU session requires an updated policy based on the indication. The indication may be obtained based on different policy update triggers such as e.g. an AF request, a client device request, internal 5G system status, e.g. lack of resources, crossing a spending limit for the subscriber, updated data in the UDR, an expired timer, a local decision based on the information received from the NWDAF (analytics enabler) or manual intervention of operation and maintenance personnel. For example, the policy update triggers may comprise the triggers described in 3GPP.

In step II in Fig. 11, the PCF 500 determines a set of SMFs 810a, 810b,..., 810n and a set of updated policy information based on the indication of the aggregated PDU session. Step II may comprise the PCF 500 determining which SMF instance to perform policy information update for depending on which SMF instance is controlling a specific PDU session leg for which the policy modification applies. When determining the set of SMFs 810a, 810b,..., 810n and the set of updated policy information, the PCF 500 may further consider local configuration. The local configuration may e.g. be the mapping of which 5Qls or QoS characteristics ranges or QoS parameters ranges shall be served by which S-NSSAI, and therefore which SMF instance in the S-NSSAI shall be receiving the policy of the related PDU session leg. Mobile Network Operators (MNOs) may define this mapping in local configuration or reference the information included in the GST/NEST (or slice profile) which includes the slice quality of service parameters, such as 3GPP 5QI, Resource Type, Priority Level, Packet Delay Budget, Packet Error Rate, Jitter, Maximum Packet Loss Rate, etc., that can be fulfilled by a particular slice. Other criteria for mapping traffic over a specific slice may include configuration related to a specific Service Level Agreements (SLAs) signed by the MNOs with a specific vertical customer or association, as well as other criteria such as client device velocity, supported client device density, issues concerning customer data handling and privacy regulations and licensing costs.

The PCF 500 transmits a set of update policy control requests 760a, 760b,..., 760n to the determined set of SMFs 810a, 810b,..., 810n, as shown in step III in Fig. 11. The set of update policy control requests 760a, 760b,..., 760n indicates the set of updated policy information associated with the aggregated PDU session.

In response to the set of update policy control requests 760a, 760b,..., 760n, the set of SMFs 810a, 810b,..., 810n transmits a set of update policy control responses 770a, 770b,..., 770n, as shown in step IV in Fig. 11. With the set of update policy control responses 770a, 770b,..., 770n, the set of SMFs 810a, 810b,..., 810n acknowledge that the set of update policy control requests 760a, 760b,..., 760n has been received from the PCF 500 and that the set of SMFs 810a, 810b,..., 810n has stored the SM policy association towards the PCF instance that sent the request.

The PCF 500 receives the set of update policy control responses 770a, 770b,..., 770n from the set of SMFs 810a, 810b,..., 810n and modifies the set of updated policy information based on the set of update policy control responses 770a, 770b,..., 770n, in step V in Fig. 11.

As the PCF 500 collects the responses form the set of SMFs 810a, 810b,..., 810n that pertain to the same aggregated PDU session, the PCF 500 is made aware that the new policy has been correctly stored in all the SMF instances related to the aggregated PDU session. In case one of the SMF instances does not receive the new policy association correctly, the PCF 500 may act accordingly, e.g. by updating the policy of the other SMF instances pertaining to a different S-NSSAIs. For example, assume that one application requires a set of QoS flows across multiple S-NSSAIs and that all of the QoS flows must be established for correct functioning. In the case, if at least one SMF instance could not update the relevant policy, the PCF 500 may decide to update the policy of the SMF instances which have established the policy correctly to revert the QoS flows that were previously established and may not be used because the full requested set could not be realized in the aggregated PDU session. In this way, it is avoided that important resources are wasted in the network, being allocated to QoS flows that the application may not be able to use, because other required QoS flows are missing and cannot be established in the current moment. In another case, if one of the SMF instances could not establish the updated policy and relevant policy may be equally established in another SMF instance, e.g. when multiple S-NSSAIs support the same 5QI, the PCF 500 can try to fulfil the requested QoS of the application by making sure that the policy for the aggregated PDU Session is always consistent with the intended usage.

In an example, if one application such as Tele Operated Driving requires a set of QoS flows across multiple S-NSSAIs and all of the QoS flows must be established for correct functioning, in the case that at least one SMF instance could not update the relevant policy, the PCF may decide to update the policy of the SMF instances which had established the policy correctly to revert the QoS flows that were previously established and may not be used because the full requested set could not be realized in the aggregated PDU session. In this way it is avoided that important resources are wasted in the network, being allocated to QoS flows that the application may not be able to use, because other required QoS flows are missing and cannot be established in the current moment. In another example, if one of the SMF instance could not establish the updated policy and relevant policy may be equally established in another SMF instance (as in the case in which multiple S-NSSAIs support the same 5QI), the PCF can also act in this way, trying to fulfil the requested QoS of the application by making sure that the policy for the aggregated PDU session is always consistent with the intended usage.

The AMF 100, the AF 300, and the PCF 500 described herein may be functions configured for communication in 3GPP related LTE and LTE-Advanced, in WiMAX and its evolution, and in fifth generation wireless technologies, such as new radio (NR).

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the AMF 100, the AF 300, and the PCF 500 comprise the necessary communication capabilities in the form of e.g., functions, means, units, elements, etc., for performing the solution. Examples of other such means, units, elements and functions comprise: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the AMF 100, the AF 300, and the PCF 500 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. Access and mobility Management Function, AMF, (100) for a communication system (700), the AMF (100) being configured to
receive a Protocol Data Unit, PDU, session request (710) from a client device (900), wherein the PDU session request (710) indicates a set of Single Network Slice Selection Assistance Information, S-NSSAI(s), for supporting an aggregated PDU session for the client device (900) in a single Public Land Mobile Network, PLMN, wherein the aggregated PDU session comprises two or more S-NSSAIs;
select a set of Session Management Functions, SMFs, (810a, 810b,..., 810n) based on the PDU session request (710);
transmit a set of PDU session operation session management context requests (720a, 720b,..., 720n) associated with the aggregated PDU session to the set of selected SMFs (810a, 810b,..., 810n);
receive a set of PDU session operation session management context responses (730a, 730b,..., 730n) from the set of selected SMFs (810a, 810b,..., 810n); and
serve an operation of the aggregated PDU session based on the set of PDU session operation session management context responses (730a, 730b,..., 730n).

2. The AMF (100) according to claim 1, wherein the PDU session request (710) further indicates a set of Data Network Names, DNNs, and/or a NSSAI associated with the set of S-NSSAI(s).

3. The AMF (100) according to claim 1 or 2, further configured to
determine the set of PDU session operation session management context requests (720a, 720b,..., 720n) based on the PDU session request (710).

4. The AMF (100) according to any one of the preceding claims, wherein each PDU session operation session management context request (720n) indicates operation information for operating a portion of the aggregated PDU session.

5. The AMF (100) according to any one of the preceding claims, wherein serving the operation of the aggregated PDU session comprises
parse a first N1 SM container comprised in the PDU session request (710), wherein the first N1 SM container comprises information about the aggregated PDU session;
determine a set of second N1 SM containers based on the first N1 SM container, wherein each second N1 SM container comprises information about a single PDU session portion; and
transmit the set of second N1 SM containers to the set of selected SMFs (810a, 810b,..., 810n) in the set of PDU session operation session management context requests (720a, 720b,..., 720n).

6. The AMF (100) according to according to any one of the preceding claims, wherein each PDU session operation session management context requests (720n) comprise an instruction to create, update or release a set of session management, SM, contexts.

7. Application Function, AF, (300) for a communication system (700), the AF (300) being configured to
transmit an AF session request (740) associated with a set of Quality-of-Service, QoS, references to a Network Exposure Function, NEF, (820), wherein the AF session request (740) indicates a S-NSSAI for each QoS reference in the set of QoS references; and
receive an AF session response (750) from the NEF (820).

8. The AF (300) according to claim 7, wherein two or more QoS references indicates different S-NSSAIs for a single PLMN.

9. Policy Control Function (500), PCF, for a communication system (700), the PCF (500) being configured to
obtain an indication of an aggregated PDU session for a client device (900), wherein the aggregated PDU session comprises two or more S-NSSAIs for a single PLMN;
determine a set of SMFs (810a, 810b,..., 810n) and a set of updated policy information based on the indication of the aggregated PDU session; and
transmit a set of update policy control requests (760a, 760b,..., 760n) to the set of SMFs (810a, 810b,..., 810n), wherein the set of update policy control requests (760a, 760b,..., 760n) indicates the set of updated policy information associated with the aggregated PDU session.

10. The PCF according to claim 9, wherein the indication of the aggregated PDU session comprises a requirement of an updated policy.

11. The PCF (500) according to claim 9 or 10, configured to
receive a set of update policy control responses (770a, 770b,..., 770n) from the set of SMFs (810a, 810b,..., 810n); and
modify the set of updated policy information based on the set of update policy control responses (770a, 770b,..., 770n).

12. Method (200) for an AMF (100), the method (200) comprising
receiving (202) a PDU session request (710) from a client device (900), wherein the PDU session request (710) indicates a set of S-NSSAI(s) for supporting an aggregated PDU session for the client device (900) in a single PLMN wherein the aggregated PDU session comprises two or more S-NSSAIs ;
selecting (204) a set of SMFs (810a, 810b,..., 810n) based on the PDU session request (710);
transmitting (206) a set of PDU session operation session management context requests (720a, 720b,..., 720n) associated with the aggregated PDU session to the set of selected SMFs (810a, 810b,..., 810n);
receiving (208) a set of PDU session operation session management context responses (730a, 730b,..., 730n) from the set of selected SMFs (810a, 810b,..., 810n); and
serving (210) an operation of the aggregated PDU session based on the set of PDU session operation session management context responses (730a, 730b,..., 730n).

13. Method (400) for an AF (300), the method (400) comprising
transmitting (402) an AF session request (740) associated with a set of QoS references to a NEF (820), wherein the AF session request (740) indicates a S-NSSAI for each QoS reference in the set of QoS references; and
receiving (404) an AF session response (750) from the NEF (820).

14. Method (600) for a PCF (500), the method (600) comprising
obtaining (602) an indication of an aggregated PDU session for a client device (900), wherein the aggregated PDU session comprises two or more S-NSSAIs for a single PLMN;
determining (604) a set of SMFs (810a, 810b,..., 810n) and a set of updated policy information based on the indication of the aggregated PDU session; and
transmitting (606) a set of update policy control requests (760a, 760b,..., 760n) to the set of SMFs (810a, 810b,..., 810n), wherein the set of update policy control requests (760a, 760b,..., 760n) indicates the set of updated policy information associated with the aggregated PDU session.

15. A computer program with a program code for performing a method according to any one of claims 12 to 14 when the computer program runs on a computer.

## Patentansprüche

1. Zugangs- und Mobilitätsverwaltungsfunktion, AMF, (100) für ein Kommunikationssystem (700), wobei die AMF (100) zu Folgendem konfiguriert ist:
Empfangen einer Protokolldateneinheit-Sitzungsanfrage, PDU-Sitzungsanfrage, (710) von einem Client-Gerät (900), wobei die PDU-Sitzungsanfrage (710) einen Satz Single Network Slice Selection Assistance Information, S-NSSAI(s), zum Unterstützen einer aggregierten PDU-Sitzung für das Client-Gerät (900) in einem einzelnen öffentlichen terrestrischen Mobilfunknetz, PLMN, angibt, wobei die aggregierte PDU-Sitzung zwei oder mehr S-NSSAIs umfasst;
Auswählen eines Satzes Sitzungsverwaltungsfunktionen, SMFs, (810a, 810b,..., 810n) basierend auf der PDU-Sitzungsanfrage (710);
Übertragen eines Satzes PDU-Sitzungsbetrieb-Sitzungsverwaltungskontextanfragen (720a, 720b,..., 720n), welcher der aggregierten PDU-Sitzung zugeordnet ist, an den Satz ausgewählter SMFs (810a, 810b,..., 810n);
Empfangen eines Satzes PDU-Sitzungsbetrieb-Sitzungsverwaltungskontextantworten (730a, 730b,..., 730n) von dem Satz ausgewählter SMFs (810a, 810b,..., 810n); und
Abwickeln eines Vorgangs der aggregierten PDU-Sitzung basierend auf dem Satz PDU-Sitzungsbetrieb-Sitzungsverwaltungskontextantworten (730a, 730b,..., 730n).

2. AMF (100) nach Anspruch 1, wobei die PDU-Sitzungsanfrage (710) ferner einen Satz Datennetzwerknamen, DNNs, und/oder eine NSSAI, die dem Satz S-NSSAI(s) zugeordnet ist, angibt.

3. AMF (100) nach Anspruch 1 oder 2, die ferner zu Folgendem konfiguriert ist
Bestimmen des Satzes PDU-Sitzungsbetrieb-Sitzungsverwaltungskontextanfragen (720a, 720b,..., 720n) basierend auf der PDU-Sitzungsanfrage (710).

4. AMF (100) nach einem der vorhergehenden Ansprüche, wobei jede PDU-Sitzungsbetrieb-Sitzungsverwaltungskontextanfrage (720n) Betriebsinformationen zum Betreiben eines Abschnitts der aggregierten PDU-Sitzung angibt.

5. AMF (100) nach einem der vorhergehenden Ansprüche, wobei das Abwickeln des Vorgangs der aggregierten PDU-Sitzung Folgendes umfasst
Parsen eines ersten N1-SM-Containers, der in der PDU-Sitzungsanfrage (710) umfasst ist, wobei der erste N1-SM-Container Informationen über die aggregierte PDU-Sitzung umfasst;
Bestimmen eines Satzes zweiter N1-SM-Container basierend auf dem ersten N1-SM-Container, wobei jeder zweite N1-SM-Container Informationen über einen einzelnen PDU-Sitzungsabschnitt umfasst; und
Übertragen des Satzes zweiter N1-SM-Container an den Satz ausgewählter SMFs (810a, 810b,..., 810n) in dem Satz PDU-Sitzungsbetrieb-Sitzungsverwaltungskontextanfragen (720a, 720b,..., 720n).

6. AMF (100) nach einem der vorhergehenden Ansprüche, wobei jede PDU-Sitzungsbetrieb-Sitzungsverwaltungskontextanfrage (720n) eine Anweisung zum Erstellen, Aktualisieren oder Freigeben eines Satzes Sitzungsverwaltungskontexte, SM-Kontexte, umfasst.

7. Anwendungsfunktion, AF, (300) für ein Kommunikationssystem (700), wobei die AF (300) zu Folgendem konfiguriert ist
Übertragen einer AF-Sitzungsanfrage (740), die einem Satz Dienstgüte-Referenzen, QoS-Referenzen, zugeordnet ist, an eine Netzwerkoffenlegungsfunktion, NEF, (820), wobei die AF-Sitzungsanfrage (740) eine S-NSSAI für jede QoS-Referenz in dem Satz QoS-Referenzen angibt; und
Empfangen einer AF-Sitzungsantwort (750) von der NEF (820).

8. AF (300) nach Anspruch 7, wobei zwei oder mehr QoS-Referenzen unterschiedliche S-NSSAIs für ein einzelnes PLMN anzeigen.

9. Richtliniensteuerfunktion (500), PCF, für ein Kommunikationssystem (700), wobei die PCF (500) zu Folgendem konfiguriert ist
Erlangen einer Anzeige einer aggregierten PDU-Sitzung für ein Client-Gerät (900), wobei die aggregierte PDU-Sitzung zwei oder mehr S-NSSAIs für ein einzelnes PLMN umfasst;
Bestimmen eines Satzes SMFs (810a, 810b,..., 810n) und eines Satzes aktualisierter Richtlinieninformationen basierend auf der Anzeige der aggregierten PDU-Sitzung; und
Übertragen eines Satzes Richtliniensteuerungs-Aktualisierungsanfragen (760a, 760b,..., 760n) an den Satz SMFs (810a, 810b,..., 810n), wobei der Satz Richtliniensteuerungs-Aktualisierungsanfragen (760a, 760b,..., 760n) den Satz aktualisierter Richtlinieninformationen anzeigt, welcher der aggregierten PDU-Sitzung zugeordnet ist.

10. PCF nach Anspruch 9, wobei die Anzeige der aggregierten PDU-Sitzung eine Anforderung einer aktualisierten Richtlinie umfasst.

11. PCF (500) nach Anspruch 9 oder 10, die zu Folgendem konfiguriert ist
Empfangen eines Satzes Richtliniensteuerungs-Aktualisierungsantworten (770a, 770b,..., 770n) von dem Satz SMFs (810a, 810b,..., 810n); und
Modifizieren des Satzes aktualisierter Richtlinieninformationen basierend auf dem Satz Richtliniensteuerungs-Aktualisierungsantworten (770a, 770b,..., 770n).

12. Verfahren (200) für eine AMF (100), wobei das Verfahren (200) Folgendes umfasst
Empfangen (202) einer PDU-Sitzungsanfrage (710) von einem Client-Gerät (900), wobei die PDU-Sitzungsanfrage (710) einen Satz S-NSSAI(s) zum Unterstützen einer aggregierten PDU-Sitzung für das Client-Gerät (900) in einem einzelnen PLMN angibt, wobei die aggregierte PDU-Sitzung zwei oder mehr S-NSSAIs umfasst; Auswählen (204) eines Satzes SMFs (810a, 810b,..., 810n) basierend auf der PDU-Sitzungsanfrage (710);
Übertragen (206) eines Satzes PDU-Sitzungsbetrieb-Sitzungsverwaltungskontextanfragen (720a, 720b,..., 720n), welcher der aggregierten PDU-Sitzung zugeordnet ist, an den Satz ausgewählter SMFs (810a, 810b,..., 810n);
Empfangen (208) eines Satzes PDU-Sitzungsbetrieb-Sitzungsverwaltungskontextantworten (730a, 730b,..., 730n) von dem Satz ausgewählter SMFs (810a, 810b,..., 810n); und
Abwickeln (210) eines Vorgangs der aggregierten PDU-Sitzung basierend auf dem Satz PDU-Sitzungsbetrieb-Sitzungsverwaltungskontextantworten (730a, 730b,..., 730n).

13. Verfahren (400) für eine AF (300), wobei das Verfahren (400) Folgendes umfasst
Übertragen (402) einer AF-Sitzungsanfrage (740), die einem Satz QoS-Referenzen zugeordnet ist, an eine NEF (820), wobei die AF-Sitzungsanfrage (740) eine S-NSSAI für jede QoS-Referenz in dem Satz QoS-Referenzen angibt; und
Empfangen (404) einer AF-Sitzungsantwort (750) von der NEF (820) .

14. Verfahren (600) für eine PCF (500), wobei das Verfahren (600) Folgendes umfasst
Erlangen (602) einer Anzeige einer aggregierten PDU-Sitzung für ein Client-Gerät (900), wobei die aggregierte PDU-Sitzung zwei oder mehr S-NSSAIs für ein einzelnes PLMN umfasst;
Bestimmen (604) eines Satzes SMFs (810a, 810b,..., 810n) und eines Satzes aktualisierter Richtlinieninformationen basierend auf der Anzeige der aggregierten PDU-Sitzung; und
Übertragen (606) eines Satzes Richtliniensteuerungs-Aktualisierungsanfragen (760a, 760b,..., 760n) an den Satz SMFs (810a, 810b,..., 810n), wobei der Satz Richtliniensteuerungs-Aktualisierungsanfragen (760a, 760b,..., 760n) den Satz aktualisierter Richtlinieninformationen anzeigt, welcher der aggregierten PDU-Sitzung zugeordnet ist.

15. Computerprogramm mit einem Programmcode zum Durchführen eines Verfahrens nach einem der Ansprüche 12 bis 14, wenn das Computerprogramm auf einem Computer ausgeführt wird.

## Revendications

1. Fonction de gestion d'accès et de mobilité, AMF, (100) pour un système de communication (700), l'AMF (100) étant configurée pour
recevoir une demande de session (710) d'unité de données de protocole, PDU, provenant d'un dispositif client (900), dans laquelle la demande de session PDU (710) indique un ensemble d'informations d'assistance à la sélection de tranche de réseau unique, S-NSSAI(s), pour prendre en charge une session PDU agrégée pour le dispositif client (900) dans un seul réseau mobile terrestre public, PLMN, dans laquelle la session PDU agrégée comprend au moins deux S-NSSAI ;
sélectionner un ensemble de fonctions de gestion de session, SMF, (810a, 810b,..., 810n) sur la base de la demande de session PDU (710) ;
transmettre un ensemble de demandes de contexte de gestion de session d'opération de session PDU (720a, 720b,..., 720n) associées à la session PDU agrégée à l'ensemble de SMF sélectionnées (810a, 810b,..., 810n) ;
recevoir un ensemble de réponses de contexte de gestion de session d'opération de session PDU (730a, 730b,..., 730n) provenant de l'ensemble de SMF sélectionnées (810a, 810b,..., 810n) ; et
servir une opération de la session PDU agrégée sur la base de l'ensemble de réponses de contexte de gestion de session d'opération de session PDU (730a, 730b,..., 730n).

2. AMF (100) selon la revendication 1, dans laquelle la demande de session PDU (710) indique également un ensemble de noms de réseau de données, de DNN et/ou un NSSAI associé à l'ensemble de S-NSSAI.

3. AMF (100) selon la revendication 1 ou 2, configurée également pour
déterminer l'ensemble de demandes de contexte de gestion de session d'opération de session PDU (720a, 720b,..., 720n) sur la base de la demande de session PDU (710).

4. AMF (100) selon l'une quelconque des revendications précédentes, dans laquelle chaque demande de contexte de gestion de session d'opération de session PDU (720n) indique des informations d'opération pour faire fonctionner une partie de la session PDU agrégée.

5. AMF (100) selon l'une quelconque des revendications précédentes, dans laquelle le service du fonctionnement de la session PDU agrégée comprend
l'analyse d'un premier conteneur N1 SM compris dans la demande de session PDU (710), dans laquelle le premier conteneur N1 SM comprend des informations concernant la session PDU agrégée ; la détermination d'un ensemble de seconds conteneurs N1 SM sur la base du premier conteneur N1 SM, dans laquelle chaque second conteneur N1 SM comprend des informations concernant une seule partie de session PDU ; et
la transmission de l'ensemble de seconds conteneurs N1 SM à l'ensemble de SMF sélectionnés (810a, 810b,..., 810n) dans l'ensemble de demandes de contexte de gestion de session d'opération de session PDU (720a, 720b,..., 720n).

6. AMF (100) selon l'une quelconque des revendications précédentes, dans laquelle chaque requête de contexte de gestion de session d'opération de session PDU (720n) comprend une instruction pour créer, mettre à jour ou libérer un ensemble de contextes de gestion de session, SM.

7. Fonction d'application, AF, (300) pour un système de communication (700), l'AF (300) étant configuré pour
transmettre une demande de session AF (740) associée à un ensemble de références de qualité de service, QoS, à une fonction d'exposition réseau, NEF, (820), dans laquelle la demande de session AF (740) indique un S-NSSAI pour chaque référence de QoS dans l'ensemble de références de QoS ; et
recevoir une réponse de session AF (750) du NEF (820).

8. AF (300) selon la revendication 7, dans laquelle au moins deux références de QoS indiquent différents S-NSSAI pour un seul PLMN.

9. Fonction de commande de politique (500), PCF, pour un système de communication (700), la PCF (500) étant configurée pour
obtenir une indication d'une session PDU agrégée pour un dispositif client (900), dans laquelle la session PDU agrégée comprend au moins deux S-NSSAI pour un seul PLMN ;
déterminer un ensemble de SMF (810a, 810b,..., 810n) et un ensemble d'informations de politique mises à jour sur la base de l'indication de la session PDU agrégée ; et
transmettre un ensemble de demandes de commande de politique de mise à jour (760a, 760b,..., 760n) à l'ensemble de SMF (810a, 810b,..., 810n), dans laquelle l'ensemble de demandes de commande de politique de mise à jour (760a, 760b,..., 760n) indique l'ensemble d'informations de politique mises à jour associées à la session PDU agrégée.

10. PCF selon la revendication 9, dans laquelle l'indication de la session PDU agrégée comprend une exigence d'une politique mise à jour.

11. PCF (500) selon la revendication 9 ou 10, configurée pour recevoir un ensemble de réponses de commande de politique de mise à jour (770a, 770b,..., 770n) provenant de l'ensemble de SMF (810a, 810b,..., 810n) ; et
modifier l'ensemble d'informations de politique mises à jour sur la base de l'ensemble de réponses de commande de politique de mise à jour (770a, 770b,..., 770n).

12. Procédé (200) pour un AMF (100), le procédé (200) comprenant
la réception (202) d'une demande de session PDU (710) provenant d'un dispositif client (900), dans lequel la demande de session PDU (710) indique un ensemble de S-NSSAI pour prendre en charge une session PDU agrégée pour le dispositif client (900) dans un seul PLMN, dans lequel la session PDU agrégée comprend au moins deux S-NSSAI ;
la sélection (204) d'un ensemble de SMF (810a, 810b,..., 810n) sur la base de la demande de session PDU (710) ;
la transmission (206) d'un ensemble de demandes de contexte de gestion de session d'opération de session PDU (720a, 720b,..., 720n) associées à la session PDU agrégée à l'ensemble de SMF sélectionnées (810a, 810b,..., 810n) ;
la réception (208) d'un ensemble de réponses de contexte de gestion de session d'opération de session PDU (730a, 730b,..., 730n) provenant de l'ensemble de SMF sélectionnées (810a, 810b,..., 810n) ; et
le service (210) d'une opération de la session PDU agrégée sur la base de l'ensemble de réponses de contexte de gestion de session d'opération de session PDU (730a, 730b,..., 730n).

13. Procédé (400) pour un AF (300), le procédé (400) comprenant la transmission (402) d'une demande de session AF (740) associée à un ensemble de références QoS à un NEF (820), dans lequel la demande de session AF (740) indique un S-NSSAI pour chaque référence de QoS dans l'ensemble de références de QoS ; et
la réception (404) d'une réponse de session AF (750) du NEF (820) .

14. Procédé (600) pour un PCF (500), le procédé (600) comprenant
l'obtention (602) d'une indication d'une session PDU agrégée pour un dispositif client (900), dans lequel la session PDU agrégée comprend au moins deux S-NSSAI pour un seul PLMN ;
la détermination (604) d'un ensemble de SMF (810a, 810b,..., 810n) et d'un ensemble d'informations de politique mises à jour sur la base de l'indication de la session PDU agrégée ; et
la transmission (606) d'un ensemble de demandes de commande de politique de mise à jour (760a, 760b,..., 760n) à l'ensemble de SMF (810a, 810b,..., 810n), dans lequel l'ensemble de demandes de commande de politique de mise à jour (760a, 760b,..., 760n) indique l'ensemble d'informations de politique mises à jour associées à la session PDU agrégée.

15. Programme informatique avec un code de programme pour exécuter un procédé selon l'une quelconque des revendications 12 à 14 lorsque le programme informatique s'exécute sur un ordinateur.
